Europäisches Patentamt

European Patent Office

Office européen des brevets

(19)

(11) Numéro de publication: **0 164 285**

**B1**

(12) **FASCICULE DE BREVET EUROPÉEN**

(45) Date de publication du fascicule du brevet:
24.02.88

(21) Numéro de dépôt: **85400951.1**

(22) Date de dépôt: **14.05.85**

(51) Int. Cl.⁴: **A 23 B 7/148,** A 23 B 7/00,
B 65 D 81/20

(54) **Procédé de conservation de denrées végétales alimentaires crues et périssables.**

(30) Priorité: **25.05.84 FR 8408203**

(43) Date de publication de la demande:
**11.12.85 Bulletin 85/50**

(45) Mention de la délivrance du brevet:
**24.02.88 Bulletin 88/8**

(84) Etats contractants désignés:
**AT BE CH DE FR GB IT LI LU NL SE**

(56) Documents cité:
**CA-A-1 007 101**
**FR-A-680 206**
**FR-A-1 280 791**
**FR-A-1 426 577**
**GB-A-272 775**
**US-A-2 401 131**
**US-A-3 773 527**

**FOOD TECHNOLOGY, vol. 34, no. 7, juillet 1980,
pages 65-74, Chicago, US; A. KRAMER et al.: "A
gas-exchange process for extending the shelf life
of raw foods"**
**CHEMICAL ABSTRACTS, vol. 88, no. 19, mai 1978,
no. 134991z, page 402, Columbus, Ohio, US; G.G.
KIREULISHVILI et al.: "Effect of blue light on
polyphenol oxidase activity and on the resistance
of apples to browning"**

(73) Titulaire: **Bonningue, Michel, 41 rue du four à
chaux Ostrohove, F-62222 St.- Martin- lès-
Boulogne- sur- mer (FR)**

(72) Inventeur: **Bonningue, Michel, 41 rue du four à
chaux Ostrohove, F-62222 St.- Martin- lès-
Boulogne- sur- mer (FR)**

(74) Mandataire: **Ecrepont, Robert, Cabinet Ecrepont 12
Place Simon Vollant (Porte de Paris), F-59800
Lille (FR)**

## Description

La présente invention concerne un procédé de conservation de denrées végétales comestibles, fraîches, périssables, en particulier les légumes, les tubercules, les bulbes, les fruits, crus, épluchés, entiers ou en morceaux (parallélépipèdes, tranches, batonnets ou rapés) de tous calibres.

Les procédés de conservation de végétaux comestibles périssables crus, font appel au froid, à l'acidité, aux emballages semi-étanches ou à la combinaison de ceux-ci.

La congélation des légumes crus épluchés, même bien conduite, aboutit à une destruction cellulaire due à la cristallisation de l'eau libre présente dans le végétal. La décongélation entraîne une perte hydrique chargée de sels minéraux, de vitamines hydrosolubles et d'arômes. En général, la consistance n'est plus aussi ferme que dans le cas de légumes frais.

En plus le stockage en froid négatif est très coûteux.

La conservation par l'acidité dénature le goût du produit.

En ce qui concerne les emballages perméables aux gaz, le délai de consommation du légume est assez bref.

Ces inconvénients ont conduit à la recherche d'un moyen de conservation dit "frais", par des procédés de vide continu ou séquentiel, remplacé ensuite par une atmosphère contrôlée gardant aux produits ses qualités de fraîcheur visuelle, chimiques, bactériologiques satisfaisantes durant six semaines au moins, à la condition d'un stockage entre 0 et 3°C, et de précautions de préparations et d'emballages les plus stériles possibles.

Le but recherché est donc de ralentir les phénomènes d'oxydation, les altérations enzymatiques et d'obtenir l'absence de micro organismes toxiques et/ou putréfiantes au moment de la consommation du produit.

- salmonella
- clotridium sulfito-réducteurs
- e. coli et coliformes
- staphylococcus auréus
- levures et moisissures

Les procédés employés pour obtenir ces résultats son inclus dans une chaîne de préparation et d'emballage, dont les postes sont successivement les suivants :

- poste A - lavage et épuchage des légumes frais,
- poste B - coupage,
- poste E - emballage en barquette étanches au gaz, puis opérations de sous vidage maximum, soit en vide continu, soit en vide séquentiel ; et réinjection d'un composé binaire gazeux (azote et anhydride carbonique).

Afin de parvenir au résultat visé, le procédé est caractérisé:

- en ce qu'après le poste de lavage et d'épluchage voire de découpage des denrées mais avant le poste de mise sous emballage étanche au gaz puis de sous-vidage maximum que ce soit en vide continu ou séquentiel, et enfin de réinjection d'un gaz, les denrées passent successivement par un poste de relavage avec de l'eau puis d'essorage et par un poste de séchage,
- en ce que l'eau de repassage d'une part est additionnée d'ascorbate de sodium et d'autre part est exempte tant de fer que de cuivre.

La chaîne comprend donc en outre les postes suivants:

- poste C - relavage avec une eau exempte de particule Fe et Cu additionnée d'ascorbate de sodium puis essorage,
- poste D - passage en tunnel asséchant et irradiation en ultraviolets.

Le poste A a pour but de supprimer la contamination initiale.

Le poste C a pour but de retarder l'action des glucidases oxydantes responsables des variations de couleur.

Le poste D a pour but la destruction des bactéries de surfaces non sporulées, par irradiation UV, ceux-si sont appliqués après un séchage du produit.

Le poste E a pour but l'isolement des végétaux des agressions extérieures et de rendre le produit consommable le plus inaltérable possible. Le vide d'air détruit les levures ainsi que les moisissures. La réinjection de gaz carbonique, dont les qualités bactériostatiques a pour mission l'inhibition d'une partie importante de la flore bactérienne, le ralentissement du développement des moisissures.

L'azote a les propriétés d'un gaz inerte, tout autre gaz inerte peut rentrer dans le mélange de l'invention.

Les postes D et E sont en surpression pour l'évacuation des corps bactériens vers l'extérieur.

Les postes C, D et E sont climatisés à 8°.

L'ensemble de la préparation, de l'emballage, du stockage se fera à basse température car celle-ci ralentit le brunissement enzymatique, et freine l'action des glucidases oxydantes, ralentit le développement des levures et moisissures et diminue fortement l'action de la prolifération bactérienne.

Un brevet concernant la conservation des laitues et des choux du 20.06.1979 N° 2.429.152 fait état d'emballage perméable à l'anhydride cabonique et à l'oxygène, dégageant naturellement 25 % d'oxygène, 3 % de gaz carbonique plus de l'azote.

Un brevet du 04.02.1974 N° 2.259.753 fait état d'un vide complet avec adjonction d'huile.

Le brevet N° 2.191.850 du 06.07.73 fait mention de conservation de légumes à l'aide de protoxyte d'azote.

Le procédé trouve également son efficacité par les soins d'hygiène apportés en amont et en aval de l'invention mais surtout par l'originalité de la méthode qui consiste à introduire des mélanges gazeux spécifiques (N2 et C02), les proportions injectées restant relativement stables à l'intérieur de l'emballage du fait de l'étanchéité de celui-ci.

L'ensemble des végétaux crus comestibles énumérés ci-aprés se conservant dans la fourchette allant de 20 à 80 % de C02, le complément étant l'azote, comme le démontre les analyses suivantes effectuées par l'institut Pasteur : Pour cette invention, les mélanges employés ont été:

-betteraves rouges: C02 70 %, N2 20 %,

analyse satisfaisante après six semaines de conservation au froid.

-navets: C02 80 %, N2 20 %

analyse satisfaisante après six semaines de conservation au froid.

-légumes divers en mélange: C02 60 %, N2 40 % soit: poireaux, pommes de terre, céleri vert, céleri rave, carottes, persil, cerfeuil, oignons, navets, haricots verts, poivrons, aubergines, concombres, potirons, épinards, bettes, choux, chicorées, petits pois, courgettes, fenouil, estragon, radis, salsifis, asperges, laitues, tomates, betteraves rouges.

analyse satisfaisante après six semaines de conservation au froid.

Les légumes gardent leur aspect frais, tant au point de vue coloration que fermeté.

Sur quatre vingt échantillons, des essais gustatifs ont été pratiqués. Ils se sont révélés parfaits.

L'exposition en vitrine réfrigérée et à la lumière n'a pas vu apparaître d'altération d'aucune sorte due au spectre solaire et à la lumière artificielle.

## Revendications

1. Procédé de conservation de denrées végétales comestibles crues et plus particulièrement mais non exclusivement de légumes et de fruits épluchés, selon lequel procédé, les denrées passent à :

- un poste de lavage et d'épluchage, voire de découpage des végétaux frais,
- un poste de mise sous emballage étanche au gaz puis de sous-vidage maximum que ce soit en vide continu ou séquentiel, et enfin de réinjection d'un gaz, ce procédé étant CARACTERISE:
- en ce qu'après le poste de lavage et d'épluchage voire de découpage des denrées mais avant le poste de mise sous emballage étanche au gaz puis de sous-vidage maximum que ce soit en vide continu ou séquentiel, et enfin de réinjection d'un gaz, les denrées passent successivement par un poste de relavage avec de l'eau puis d'essorage et par un poste de séchage,
- en ce que l'eau de relavage, d'une part, est additionnée d'ascorbate de sodium et d'autre part, est exempte tant de fer que de cuivre.

2. Procédé selon la revendication 1 caractérisé en ce qu'en plus du séchage, on détruit les éventuelles bactéries de surface non sporulées par irradiation des denrées.

3. Procédé selon la revendication 2 caractérisé en ce que l'irradiation s'opère aux rayons ultraviolets.

4. Procédé selon l'une quelconque des revendications 1 à 3 caractérisé en ce qu'on place les postes de séchage et d'emballage en surpression afin d'évacuer les corps bactériens vers l'extérieur.

5. Procédé selon l'une quelconque des revendications 1 à 4 caractérisé en ce qu'on climatise à 8°c les postes de relavage et d'essorage puis de séchage et d'emballage.

6. Procédé selon l'une quelconque des revendications 1 à 5 caractérisé en ce que le gaz réinjecté est un composé binaire d'un gaz bactériostatique et d'un gaz inerte.

7. Procédé selon la revendication 6 caractérisé en ce que le mélange binaire comprend entre 20 % et 80 % de gaz bactériostatique.

8. Procédé selon la revendication 7 appliqué à la conservation d'au moins l'une des denrées que sont poireaux, pommes de terre, céleri vert, céleri rave, carottes, persil, cerfeuil, oignons, navets, haricots verts, poivrons, aubergines, concombres, potirons, épinards, bettes, choux, chicorée, petits pois, courgettes, fenouil, estragon, radis, salsifis, asperges, laitues, tomates, betteraves rouges, voire même des fruits, caractérisé en ce que le mélange binaire comprend environ 60 % de gaz bactériostatique et environ 40 % de gaz inerte.

## Patentansprüche

1. Verfahren zur Konservierung von roh essbaren Pflanzenlebensmitteln und insbesondere, aber nicht ausschließlich von Gemüse und geschälten Früchten, wobei die Lebensmittel in dem Verfahren folgenden Verfahrensschritten unterzogen werden:

- einer Station zum Waschen und Schälen, und überdies zum Zerschneiden der frischen Vegetabilien,
- eine Station zum gasdichten Verpacken, und zum anschließenden maximalen Evakuieren, entweder mit einem kontinuierlich vorhandenen oder aufeinanderfolgend erzeugten Vakuum und schließlich zur Wiederinjektion eines Gases, wobei das Verfahren dadurch gekennzeichnet ist:

- daß nach der Station zum Waschen und Schälen, überdies zum Zerschneiden der Lebensmittel aber vor der Station zum gasdichten Verpacken und nachfolgendem maximalen Entleeren entweder mit einem kontinuierlich aufrechterhaltenen oder aufeinanderfolgend erzeugten Vakuum und der anschließenden Wiederinjektion eines Gases die Lebensmittel aufeinanderfolgend eine Station zum Nachwaschen mit Wasser und dem nachfolgenden Trocknen an der Luft und danach eine Heizungsstation durchlaufen und

- daß das Wasser zum Nachwaschen einerseits mit Natriumascorbat versetzt und andererseits von so viel Eisen wie Kupfer befreit ist.

2. Verfahren nach Anspruch 1, dadurch gekennzeichnet, daß man zusätzlich zum Heizen eventuelle nicht Sporen bildende Oberflächenbakterien durch Bestrahlung der Lebensmittel zerstört.

3. Verfahren nach Anspruch 2, dadurch gekennzeichnet, daß die Bestrahlung mit ultravioletten Strahlen erfolgt.

4. Verfahren nach einem der Ansprüche 1 bis 3, dadurch gekennzeichnet, daß man die Stationen zum Heizen und Verpacken unter Überdruck setzt, um die Bakterienkörper nach außen zu räumen.

5. Verfahren nach einem der Ansprüche 1 bis 4, dadurch gekennzeichnet, daß man die Stationen zum Nachwaschen und Lufttrocknen sowie zum Heizen und Verpacken klimatisiert mit 8° C.

6. Verfahren nach einem der Ansprüche 1 bis 5, dadurch gekennzeichnet, daß das wiederinjizierte Gas ein binäres Gemisch eines Inertgases sowie eines bakterienhemmenden Gases ist.

7. Verfahren nach Anspruch 6, dadurch gekennzeichnet, daß die binäre Mischung zwischen 20 und 80 % des bakterienhemmenden Gases aufweist.

8. Verfahren nach Anspruch 7, angewendet auf die Konservierung zumindest eines der Lebensmittel wie Lauch, Kartoffeln, grüner Sellerie, Sellerierüben, Karotten, Petersilie, Kerbel, Zwiebeln, Futterrüben, grüne Bohnen, Paprika, Overginen, Gurken, Riesenkürbisse, Spinat, Mangold, Kohl, Chicoree, junge Erbsen, Zucchini, Fenchel, Estragon, Rettich, Schwarzwurzeln, Spargel, Kopfsalat, Tomaten, rote Rüben und zu dem Obst, dadurch gekennzeichnet, daß die binäre Mischung ungefähr 60 % bakterienhemmendes Gas und ungefähr 40 % Inertgas aufweist.

**Claims**

1. A process for preserving raw and perishable vegetable food products, more particularly but not exclusively peeled vegetables and fruit, the products going to:

a station for washing and peeling and possibly cutting fresh vegetables;

A station for gas-tight packing, then maximum exhaustion by means of a continuous or sequential vacuum and finally of reinjection of a gas,

characterised in that:

After the first station and before the second station the products go consecutively through a station for rewashing with water, then centrifuging, and through a drying station;

The rewashing water has an addition of sodium ascorbate and is free from iron and copper.

2. A process according to claim 1, characterised in that in addition to drying any non-sporulated surface bacteria are destroyed by irradiation of the food products.

3. A process according to claim 2, characterised in that irradiation is by ultraviolet rays.

4. A process according to any of claims 1 - 3, characterised in that the drying and packing stations are maintained at a positive pressure in order to remove bacterial agents to the exterior.

5. A process according to any of claims 1 - 4, characterised in that the stations for rewashing and centrifuging, then drying and packing, are air conditioned at 8° C.

6. A process according to any of claims 1 - 5, characterised in that the reinjected gas is a binary compound of a bacteriostatic gas and an inert gas.

7. A process according to claim 8, characterised in that the binary mixture contains between 20 % and 80 % of bacteriostatic gas.

8. A process according to claim 7 applied to the conservation of at least one of the following food products - leeks, potatoes, green celery, celeriac, carrots, parsley, chervil, onions, turnips, french beans, pimentos, aubergines, cucumbers, pumpkins, spinach, beets, cauliflowers, chicory, green peas, corgettes, fennel, tarragon, radishes, salsify, asparagus, lettuce, tomatoes, red beetroots and possibly fruits, characterised in that the binary mixture contains approximately 60 % of bacteriostatic gas and approximately 40 % of inert gas.